# EUROPÄISCHE PATENTSCHRIFT

(11) **EP 2 637 833 B1**
(45) Veröffentlichungstag und Bekanntmachung des Hinweises auf die Patenterteilung: **12.03.2014**
(21) Anmeldenummer: 11722291.9
(22) Anmeldetag: 25.03.2011
(51) Int. Cl.: B29C 43/36, B29C 70/44, B29C 43/12

(54) **VAKUUMHAUBEN-VORRICHTUNG**
VACUUM BAG DEVICE
DISPOSITIF DE SAC A VIDE

(30) Priorität: 10.11.2010 WO PCT/DE2010/001314
(43) Veröffentlichungstag der Anmeldung: 18.09.2013
(73) Patentinhaber: Waldemar Piekenbrink Gfk - Modell- und Formenbau Produktions- und Vertriebs GmbH, 88471 Laupheim (DE)
(72) Erfinder: PIEKENBRINK, Björn, 88471 Laupheim (DE); PIEKENBRINK, Olaf, 88471 Laupheim (DE)
(74) Vertreter: Kiessling, Christian
(86) Internationale Anmeldenummer: PCT/DE2011/000334
(87) Internationale Veröffentlichungsnummer: WO 2012/062237

(56) Entgegenhaltungen:
- WO-A1-87/05557
- DE-A1- 4 222 267
- GB-A- 2 172 542
- US-A- 3 311 517
- US-A- 6 031 212
- US-A1- 2007 296 126

## Beschreibung

Die Erfindung betrifft eine Vakuumhauben-Vorrichtung mit einer Vakuumhaube zum gasdichten Abdecken während eines mittels Gasdruck bewirkten Verpressens einer Schicht eines auf einen festen Formkörper aufgebrachten aushärtbaren Kompositsubstrats enthaltend eine Faserstruktur und eine in die Faserstruktur eingebrachte Matrix eines aushärtbaren viskosen Füllmaterials.

Vakuumhauben finden Verwendung in dem Verfahren der Vakuumevakuierung, bei dem moderne Kunststoffmaterialien in eine vorherbestimmte Form gebracht und anschließend ausgehärtet werden.

Bei einem Vorgang der Vakuumevakuierung gemäß Stand der Technik wird ein Werkstück mittels Dichtungsfolie und Dichtschnur von der Umgebungsatmosphäre abgeschirmt (evakuiert) und anschließend unter Vakuum gesetzt. Ein Nachteil bei diesem Verfahren liegt darin, dass eine ausreichende Abdichtung zwischen Dichtungsfolie und Werkstück insbesondere in einem peripheren Bereich der Dichtungsfolie nur unter hohem Aufwand an Material und Zeit für eine ausreichende Abdichtungsarbeit erreicht wird, wobei eine exakte Anbringung einer Dichtungsfolienhaube an einem Formkörper insbesondere bei stark ausgeprägten konkav/konvexen Konturen des Formkörpers nicht immer möglich ist.

Dieser aufzuwendende Zeitraum kann, je nach verwendetem Harzsystem, schnell die Gelierzeit des Kunststoffes übersteigen, d.h. der Kunststoff beginnt auszuhärten bevor er mittels Vakuum und Werkzeug in Form gebracht wurde oder im Wege einer Vakuumevakuierung genügend verdichtet wurde.

Ein weiterer Nachteil der Folienmethode ist eine fehlende Wiederverwendbarkeit einer Dichtungsfolie, die sich auf einen einmaligen Einsatz beschränkt.

Ein wichtiger Verfahrensschritt bei der Kunststoffverarbeitung mittels Vakuumevakuierung ist die Verwendung eines Autoklavs, d.h. eines beheizbaren Druckkessels, in dem zu fertigende Werkstücke einem erhöhten Atmosphärendruck (bis 10 bar) ausgesetzt werden können.

In Verbindung mit einer unterseitigen Vakuumevakuierung kann dabei ein oberseitiger Druck auf ein Werkstück aufgebracht werden, wodurch eine besonders formgenaue Herstellung, ein Kunststoff-Materialgefüge besonders hoher Qualität sowie eine exakte Kantenausbildung bei der Herstellung eines Werkstückes ermöglicht ist.

Die Verwendung eines Autoklavs bei einer Vakuumevakuierung setzt indes eine robuste Dichtigkeit im Bereich einer Übergangszone des Werkstücks zum Evakuierungsmittel voraus, da die Wirkung etwaiger Undichtigkeiten im Bereich der Dichtungsfolie im Autoklav durch den erhöhten Umgebungsdruck verstärkt wird.

Um die Nachteile einer Verwendung von Dichtungsfolien im Verfahren der Vakuumevakuierung zu minimieren, werden erfindungsgemäß Silicondruckhauben entwickelt.

Aufgrund der chemischen Zusammensetzung von Epoxydharzen ist bei diesen eine Aushärtung im Autoklav bei einem Druck von 2 bis 4 ATÜ und einer Temperatur von etwa 140°C vorgesehen. Der Druck verhindert dabei ein Ausgasen von Harzbestandteilen, wie es insbesondere bei einer hohen Aushärtetemperatur ansonsten auftreten würde.

US-A-2007 296 126, GB-A-2 172 542 und WO-A-8 705 557 offenbaren Vakuumhauben-Vorrichtungen, wobei Abdichtungselemente in einem peripheren Bereich vorgesehen werden.

Aufgabe der Erfindung ist es deshalb, eine, eine Dichtungsfolie ersetzende und als Abdeckeinheit wirkende Hauben-Vorrichtung zu schaffen, die während des Vorgangs des Verpressens und Aushärtens eines aushärtbare Bindematerialien enthaltenden, drei-dimensional gebogenen Kompositsubstrats das Substrat nach außen gleichmäßig gasdicht umschließt, um das Substrat mittels eines auf die Hauben-Vorrichtung wirkenden Gases einem in alle Richtungen gleichmäßig stark wirkenden Gasdruck auszusetzen.

Für eine Hauben-Vorrichtung der eingangs genannten Art wird diese Aufgabe erfindungsgemäß dadurch gelöst, dass die Vakuumhaube aus einem elastischen Kunststoffmaterial hergestellt ist und in einem peripheren Bereich einen einstückig mit der Vakuumhaube ausgebildeten Dichtkeil enthält, der während eines Verpressens der Schicht aus aushärtbarem Kompositsubstrat in eine in einem peripheren Bereich des Formkörpers ausgebildete Dichtnut gasdicht eingreift gemäß den Merkmalen des anliegenden Anspruchs 1.

Bevorzugte Ausführungsformen der Erfindung sind Gegenstand der Unteransprüche.

Bei der erfindungsgemäßen Hauben-Vorrichtung wird durch die Merkmalskombination, dass die Vakuumhaube aus einem elastischen Kunststoffmaterial hergestellt ist und in einem peripheren Bereich einen einstückig mit der Vakuumhaube ausgebildeten Dichtkeil enthält, der während eines Verpressens der Schicht aus aushärtbarem Kompositsubstrat in eine in einem peripheren Bereich des Formkörpers ausgebildete Dichtnut gasdicht eingreift, erreicht, dass eine Abdeckeinheit geschaffen ist, die passgenau auf das Oberflächenprofil eines aus dem Kompositsubstrat herzustellenden Werkstückes gefertigt werden kann, wobei alle Konturenbereiche des Werkstücks während eines Verpressungsvorgangs einerseits gleichmäßig mit einem Überdruck und andererseits gleichmäßig mit Unterdruck beaufschlagt werden können.

Bei Einsatz der erfindungsgemäßen Hauben-Vorrichtung werden insbesondere die bei den herkömmlicherweise zum Einsatz kommenden Dichtungsfolien häufig auftretenden Druck-, Zug- und Spannungsbelastungen vermieden, so dass bei Einsatz der erfindungsgemäßen Hauben-Vorrichtung eine lokale Herabsetzung eines Verpressungsdruckes und damit verbundene Harzansammlungen vermieden werden.

Die erfindungsgemäße Hauben-Vorrichtung ist dabei so robust, dass sie für eine Mehrzahl von Anwendungen geeignet ist. Sie ist somit kein Wegwerfhilfsmittel wie die herkömmliche Dichtungsfolie mit Dichtschnur. Bei Einsatz der erfindungsgemäßen Hauben-Vorrichtung werden Arbeitsaufwand und Abfallmenge gegenüber den herkömmlicherweise zur Vakuumverpressung aushärtbarer Kompositsubstrate eingesetzten Mitteln reduziert. Gleichzeitig ist eine Qualitätssteigerung der erstellten Werkstücke durch eine gleichbleibende Vakuumwirkung von einem zum nächsten Arbeitszyklus zu verzeichnen.

Des Weiteren ist eine 100% wirksame Dichtung zwischen Werkstückoberfläche und Umgebungsatmosphäre mittels zweier unabhängiger Vakuumkreise für Dichtnut und Werkstückoberfläche ermöglicht.

Gemäß einer ersten bevorzugten Ausführungsform der erfindungsgemäßen Vorrichtung ist vorgesehen, dass der Dichtkeil im Querschnitt frustkonisch ausgebildet ist. Vorzugsweise ist eine Basisfläche des Dichtkeils dabei im Querschnitt konkav gebogen ausgebildet.

Des Weiteren ist der Dichtkeil vorzugsweise dimensioniert, um im Bereich der seitlichen Schenkel im Presssitz formschlüssig in die aus einem festen Material hergestellte Dichtnut zu passen.

Gemäß einer weiteren bevorzugten Ausführungsform der erfindungsgemäßen Vorrichtung ist vorgesehen, dass die Dichtnut im Querschnitt eine frustkonisch ausgebildete Höhlung mit konkav gebogener Grundfläche bildet. Die Dichtnut ist dabei vorzugsweise dimensioniert, um bei im Bereich der seitlichen Schenkel gegebenem Presssitz des Dichtkeils zwischen der Basisfläche des Dichtkeils und der Grundfläche der frustkonischen Höhlung die Bildung eines gasgefüllten Freiraums sicherzustellen.

Der Freiraum ist vorzugsweise dimensioniert, um im Vorfeld des Vorgangs eines mittels Gasdruck bewirkten Verpressens einer Schicht eines aushärtbaren Kompositsubstrats ein Volumen im Bereich von 10% bis 20% des Volumens der frustkonischen Höhlung einzunehmen.

Des Weiteren ist die Elastizität des elastischen Kunststoffmaterials des Dichtkeils vorzugsweise bemessen, um bei dem Vorgang eines mittels Gasdruck bewirkten Verpressens einer Schicht eines aushärtbaren Kompositsubstrats eine Bewegung der Basisfläche des Dichtkeils in Richtung auf die Grundfläche der frustkonischen Höhlung der Dichtnut sicherzustellen, ohne auch nur an einer Stelle die Grundfläche zu berühren.

Das elastische Kunststoffmaterial der Silikonhaube einschließlich des Dichtkeils kann vorzugsweise von einem Silikonkautschuk, einem Latexmaterial oder von einem Elastomer gebildet sein, und die Faserstruktur ist vorzugsweise von einem Fasergewebe gebildet.

Die erfindungsgemäße Vorrichtung wird im Folgenden anhand einer bevorzugten Ausführungsform erläutert, die in den Figuren der Zeichnung dargestellt ist. Darin zeigen:
- Fig. 1: Eine bevorzugte Ausführungsform der erfindungsgemäßen Vorrichtung in einer Ansicht von schräg oben;

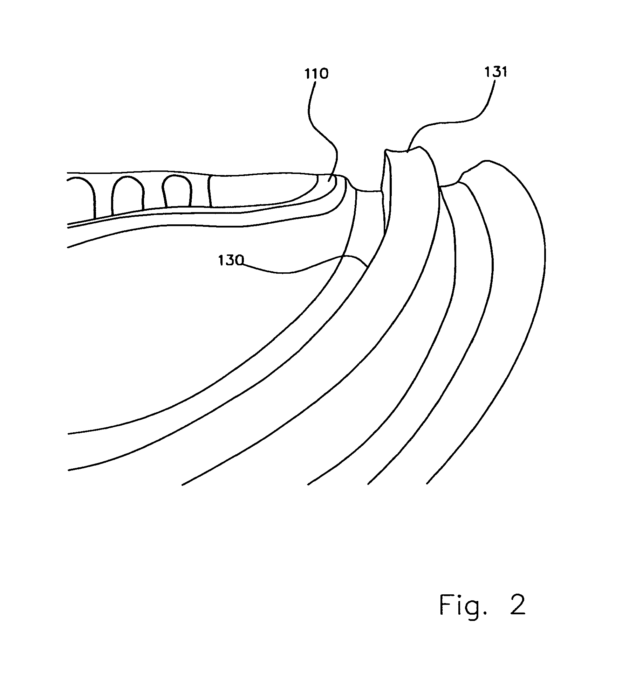

- Fig. 2: in Fig. 1 dargestellte bevorzugte Ausführungsform der erfindungsgemäßen Vorrichtung in einer Detailansicht von unten.

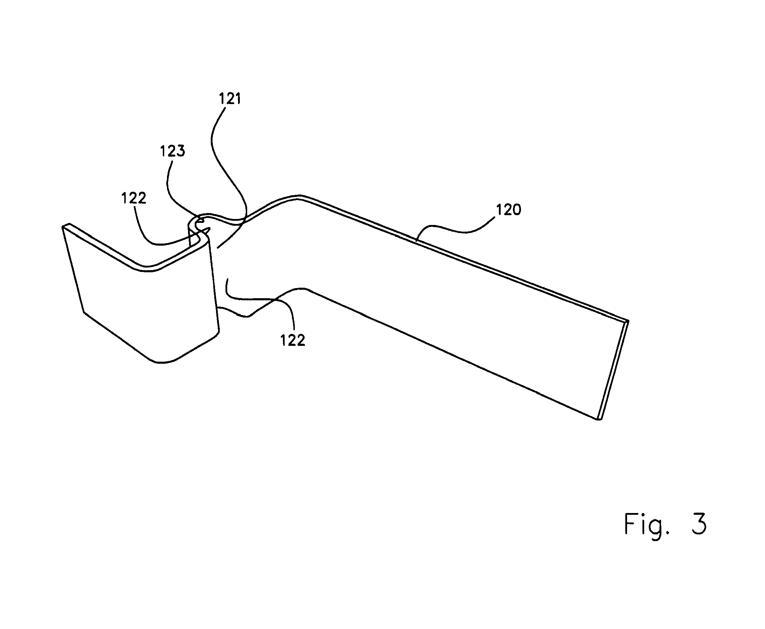

- Fig. 3: Eine bevorzugte Ausführungsform der erfindungsgemäßen Vorrichtung in einer den Formkörper darstellenden Ansicht von schräg oben.
- Fig. 4: Eine bevorzugte Ausführungsform der erfindungsgemäßen Vorrichtung in einer den Formkörper darstellenden Seitenansicht.

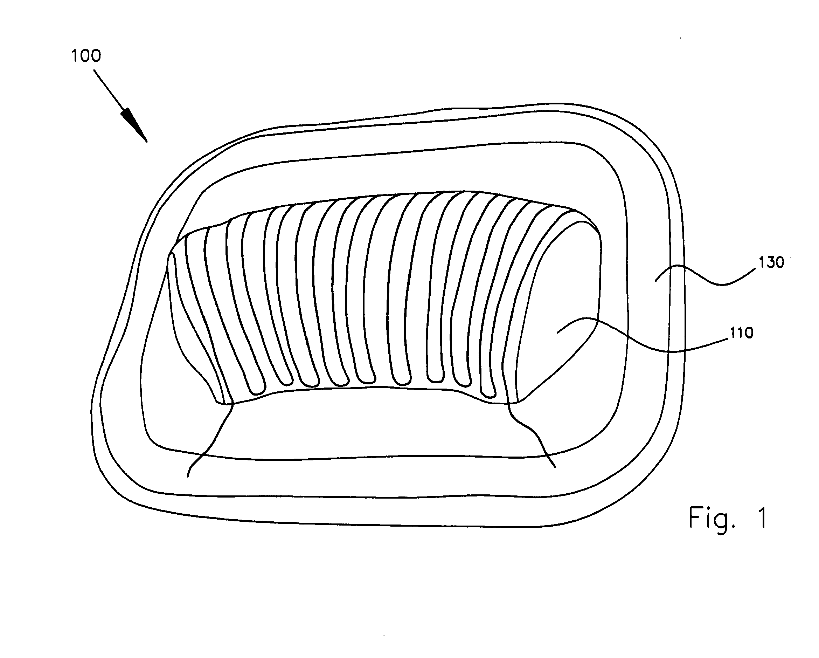

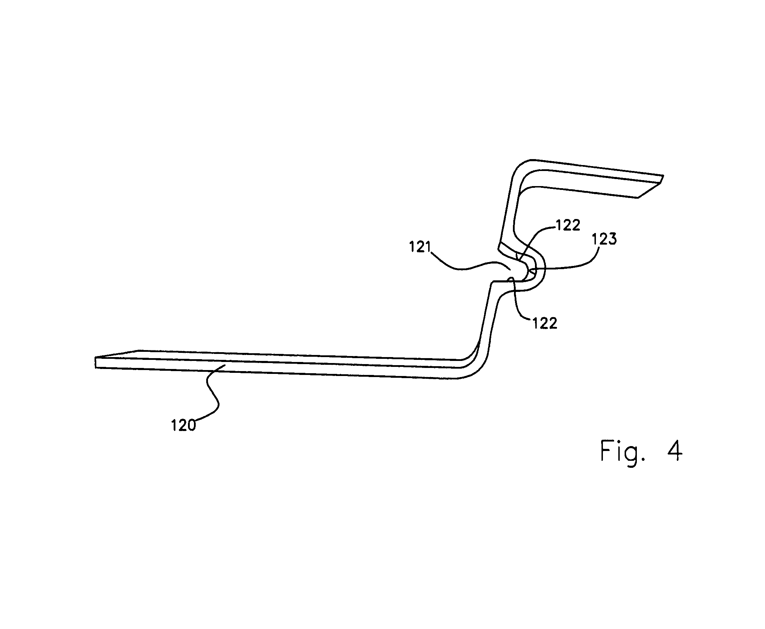

Die in den Figuren 1 und 4 dargestellte erfindungsgemäße Vakuumhauben-Vorrichtung 100 enthält eine Vakuumhaube 110 zum gasdichten Abdecken eines Kompositsubstrats mit einer Faserstruktur und eine in die Faserstruktur eingebrachte Matrix eines aushärtbaren viskosen Füllmaterials, wobei die Vakuumhaube 110 für einen Einsatz während eines Verpressens und Aushärtens des Kompositsubstrats vorgesehen ist, bei dem eine Schicht eines auf einen festen Formkörper 120 aufgebrachten aushärtbaren Kompositsubstrats mittels Gasdruck auf den Formkörper 120 aufpressbar ist.

Die Vakuumhaube 110 ist dabei aus einem elastischen Kunststoffmaterial hergestellt und enthält in einem peripheren Bereich einen einstückig mit der Vakuumhaube 110 ausgebildeten Dichtkeil 130, der während eines Verpressens der Schicht aus aushärtbarem Kompositsubstrat in eine in einem peripheren Bereich des Formkörpers 120 ausgebildete Dichtnut 121 gasdicht eingreift.

Der Dichtkeil 130 ist im Querschnitt frustkonisch ausgebildet, wobei eine Basisfläche 131 des Dichtkeils 130 im Querschnitt konkav gebogen ausgebildet ist. Des Weiteren ist der Dichtkeil 130 dimensioniert, um im Bereich der seitlichen Schenkel 122 im Presssitz formschlüssig in die aus einem festen Material hergestellte Dichtnut 121 zu passen.

Die Dichtnut 121 bildet im Querschnitt eine frustkonisch ausgebildete Höhlung mit konkav gebogener Grundfläche 123 und ist dimensioniert, um bei im Bereich der seitlichen Schenkel 122 gegebenem Presssitz des Dichtkeils 130 zwischen der Basisfläche 131 des Dichtkeils 130 und der Grundfläche 123 der frustkonischen Höhlung die Bildung eines gasgefüllten Freiraums sicherzustellen.

Der Freiraum ist dabei dimensioniert, um im Vorfeld des Vorgangs eines mittels Gasdruck bewirkten Verpressens einer Schicht eines aushärtbaren Kompositsubstrats ein Volumen im Bereich von 20% des Volumens der frustkonischen Höhlung einzunehmen.

Die Elastizität des elastischen Kunststoffmaterials des Dichtkeils 130 ist bemessen, um bei dem Vorgang eines mittels Gasdruck bewirkten Verpressens einer Schicht eines aushärtbaren Kompositsubstrats eine Bewegung der Basisfläche 131 des Dichtkeils 130 in Richtung auf die Grundfläche 123 der frustkonischen Höhlung der Dichtnut 121 zu sicherzustellen, ohne auch nur an einer Stelle die Grundfläche 123 zu berühren.

Das elastische Kunststoffmaterial der Vakuumhaube 110 einschließlich des Dichtkeils 130 ist von einem Silikonkautschuk gebildet, und die Faserstruktur ist von einem Fasergewebe gebildet.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Vakuumhauben-Vorrichtung (100) mit einer Vakuumhaube (110) zum gasdichten Abdecken während eines mittels Gasdruck bewirkten Verpressens einer Schicht eines auf einen festen Formkörper (120) aufgebrachten aushärtbaren Kompositsubstrats enthaltend eine Faserstruktur und eine in die Faserstruktur eingebrachte Matrix eines aushärtbaren viskosen Füllmaterials, wobei die Vakuumhaube (110) aus einem elastischen Kunststoffmaterial hergestellt ist und in einem peripheren Bereich einen einstückig mit der Vakuumhaube (110) ausgebildeten Dichtkeil (130) enthält, der während eines Verpressens der Schicht aus aushärtbarem Kompositsubstrat in eine in einem peripheren Bereich des Formkörpers (120) ausgebildete Dichtnut (121) gasdicht eingreift **dadurch gekennzeichnet, dass** die Dichtnut (121) im Querschnitt eine frustkonisch ausgebildete Höhlung mit konkav gebogener Grundfläche (123) bildet, wobei die Dichtnut (121) dimensioniert ist, um bei im Bereich der seitlichen Schenkel (122) gegebenem Presssitz des Dichtkeils (130) zwischen der Basisfläche (131) des Dichtkeils (130) und der Grundfläche (123) der frustkonischen Höhlung die Bildung eines gasgefüllten Freiraums sicherzustellen, und die Elastizität des elastischen Kunststoffmaterials des Dichtkeils (130) bemessen ist, um bei dem Vorgang eines mittels Gasdruck bewirkten Verpressens einer Schicht eines aushärtbaren Kompositsubstrats eine Bewegung der Basisfläche (131) des Dichtkeils (130) in Richtung auf die Grundfläche (123) der frustkonischen Höhlung der Dichtnut (121) zu sicherzustellen, ohne auch nur an einer Stelle die Grundfläche (123) zu berühren.

2. Vorrichtung nach Anspruch 1, **dadurch gekennzeichnet, dass** der Dichtkeil (130) im Querschnitt frustkonisch ausgebildet ist.

3. Vorrichtung nach Anspruch 2, **dadurch gekennzeichnet, dass** eine Basisfläche (131) des Dichtkeils (130) im Querschnitt konkav gebogen ausgebildet ist.

4. Vorrichtung nach einem der vorhergehenden Ansprüche, **dadurch gekennzeichnet, dass** der Dichtkeil (130) dimensioniert ist, um im Bereich der seitlichen Schenkel (122) im Presssitz formschlüssig in die aus einem festen Material hergestellte Dichtnut (121) zu passen.

5. Vorrichtung nach einem der vorhergehenden Ansprüche, **dadurch gekennzeichnet, dass** der Freiraum dimensioniert ist, um im Vorfeld des Vorgangs eines mittels Gasdruck bewirkten Verpressens einer Schicht eines aushärtbaren Kompositsubstrats ein Volumen im Bereich von 10% bis 20% des Volumens der frustkonischen Höhlung einzunehmen.

6. Vorrichtung nach einem der Ansprüche 1 bis 5, **dadurch gekennzeichnet, dass** das elastische Kunststoffmaterial der Vakuumhaube (110) einschließlich des Dichtkeils (130) von einem Silikonkautschuk gebildet ist.

7. Vorrichtung nach einem der Ansprüche 1 bis 5, **dadurch gekennzeichnet, dass** das elastische Kunststoffmaterial der Vakuumhaube (110) einschließlich des Dichtkeils (130) von einem Latexmaterial gebildet ist.

8. Vorrichtung nach einem der Ansprüche 1 bis 5, **dadurch gekennzeichnet, dass** das elastische Kunststoffmaterial der Vakuumhaube (110) einschließlich des Dichtkeils (130) von einem Elastomer gebildet ist.

9. Vorrichtung nach einem der vorhergehenden Ansprüche, **dadurch gekennzeichnet, dass** die Faserstruktur von einem Fasergewebe gebildet ist.

## Claims

1. A vacuum bag device (100) comprising a vacuum bag (110) for the provision of a gas-tight cover over a layer of curable composite composition pressed against a solid shaped body (120) by means of gas pressure, which shaped body has a fiber structure containing a matrix of embedded curable viscous filling material, wherein said vacuum bag (110) is fabricated from an elastic plastics material and contains, in a peripheral region, a sealing lip (130) integrally formed with said vacuum bag (110), which lip, during the application of gas pressure to said layer of curable composite composition engages in a gas-tight manner in a sealing groove (121) formed in a peripheral region of said shaped body (120), **characterized in that** said sealing groove (121) forms, in cross-section, a frustoconical cavity having a concavely bent base (123), wherein said sealing groove (121) is of such a size as to ensure, in the region of a force against the lateral limb (122) of said sealing lip (130) between said base surface (131) of said sealing lip (130) and said base (123) of said frustoconical cavity, the formation of a gas-filled space, and the elasticity of said elastic plastics material of said sealing lip (130) is such as to ensure movement of said sealing lip (130) in the direction towards the base (123) of said frustoconical cavity of said sealing groove (121) during the process of applying gas pressure to a layer of a curable composite composition movement of said base surface (131), without at any point touching that base (123).

2. The device as defined in claim 1, **characterized in that** said sealing lip (130) is frustoconical in cross-section.

3. The device as defined in claim 2, **characterized in that** a base surface (131) of said sealing lip (130) is of concavely bent in cross-section.

4. The device as defined in any one of the previous claims, **characterized in that** said sealing lip (130) is of a size such as it fits, in the region of a lateral limb (122), positively with a force fit in said sealing groove (121) of solid material.

5. The device as defined in any one of the previous claims, **characterized in that** the free space is of a size such that, prior to commencement of the process of applying gas pressure to a layer of a curable composite composition, it occupies a volume ranging from 10% to 20% of the volume of said frustoconical cavity.

6. The device as defined in any one of claims 1 to 5, **characterized in that** said elastic plastics material of the vacuum bag (110) including said sealing lip (130) is fabricated from a silicon rubber.

7. The device as defined in any one of claims 1 to 5, **characterized in that** said elastic plastics material of the vacuum bag (110) including said sealing lip (130) is fabricated from a latex material.

8. The device as defined in any one of claims 1 to 5, **characterized in that** said elastic plastics material of the vacuum bag (110) including said sealing lip (130) is fabricated from an elastomer.

9. The device as defined in any one of the previous claims, **characterized in that** said fiber structure is formed by a fabric.

## Revendications

1. Dispositif de couvercle à vide (100) comportant un couvercle à vide (110) destiné au recouvrement étanche aux gaz pendant une compression, réalisée par application d'une pression de gaz, d'une couche d'un substrat composite durcissable appliqué sur un corps moulé (120) solide, qui comporte une structure fibreuse et une matrice d'un matériau de remplissage visqueux durcissable introduit dans la structure fibreuse, le couvercle à vide (110) étant fabriqué à partir d'un matériau élastique en matière plastique et comportant dans une zone périphérique un coin d'étanchéité (130) réalisé d'un seul tenant avec le couvercle à vide (110), ledit coin d'étanchéité venant s'engager de manière étanche aux gaz, pendant une compression de la couche en substrat composite durcissable, dans une rainure d'étanchéité (121) réalisée dans une zone périphérique du corps moulé (120), **caractérisé en ce que** la rainure d'étanchéité (121) constitue, en section transversale, une cavité grossièrement conique ayant une surface de base (123) courbée de manière concave, la rainure d'étanchéité (121) étant dimensionnée de manière à garantir la formation d'un espace libre rempli de gaz lors d'un ajustement serré du coin d'étanchéité (130) dans la zone des branches latérales (122) entre la surface de base (131) du coin d'étanchéité (130) et la surface de base (123) de la cavité grossièrement conique, et l'élasticité du matériau élastique en matière plastique du coin d'étanchéité (130) étant sélectionnée de manière à, lors du processus d'une compression, réalisée par application d'une pression de gaz, d'une couche d'un substrat composite durcissable, garantir un mouvement de la surface de base (131) du coin d'étanchéité (130) en direction de la surface de base (123) de la cavité grossièrement conique de la rainure d'étanchéité (121) sans effleurer la surface de base (123), ne serait-ce qu'à un seul endroit.

2. Dispositif selon la revendication 1, **caractérisé en ce que** le coin d'étanchéité (130) présente une section grossièrement conique.

3. Dispositif selon la revendication 2, **caractérisé en ce qu'**une surface de base (131) du coin d'étanchéité (130) présente une section concave courbée.

4. Dispositif selon une des revendications précédentes, **caractérisé en ce que** le coin d'étanchéité (130) est dimensionné de telle manière que, dans la zone des branches latérales (122), il coïncide par complémentarité de formes avec la rainure d'étanchéité (121) composée d'un matériau solide quand il est ajusté serré.

5. Dispositif selon une des revendications précédentes, **caractérisé en ce que** l'espace libre est dimensionné de manière à ce que, en amont du processus d'une compression, réalisée par application d'une pression de gaz, d'une couche d'un substrat composite durcissable, il occupe un volume situé entre environ 10% et 20% du volume de la cavité grossièrement conique.

6. Dispositif selon une des revendications de 1 à 5, **caractérisé en ce que** le matériau élastique en matière plastique du couvercle à vide (110) y compris le coin d'étanchéité (130) est constitué par un caoutchouc silicone.

7. Dispositif selon une des revendications de 1 à 5, **caractérisé en ce que** le matériau élastique en matière plastique du couvercle à vide (110) y compris le coin d'étanchéité (130) est constitué par un latex.

8. Dispositif selon une des revendications de 1 à 5, **caractérisé en ce que** le matériau élastique en matière plastique du couvercle à vide (110) y compris le coin d'étanchéité (130) est constitué par un élastomère.

9. Dispositif selon une des revendications précédentes, **caractérisé en ce que** la structure fibreuse est constituée par un tissu de fibres.
